# EUROPÄISCHE PATENTSCHRIFT

(11) **EP 3 808 498 B1**
(45) Veröffentlichungstag und Bekanntmachung des Hinweises auf die Patenterteilung: **13.09.2023**
(21) Anmeldenummer: 19405017.5
(22) Anmeldetag: 18.10.2019
(51) Int. Cl.: B23Q 1/00

(54) **EINSPANNEINRICHTUNG ZUM AUFBAU AUF EINEM VERSTELLBAREN MASCHINENTISCH**
CLAMPING DEVICE BUILT UP ON AN ADJUSTABLE MACHINE TABLE
DISPOSITIF DE SERRAGE MONTÉ SUR UNE TABLE DE MACHINE RÉGLABLE

(43) Veröffentlichungstag der Anmeldung: 21.04.2021
(73) Patentinhaber: Hofer Spanntechnik GmbH, 5408 Ennetbaden (CH)
(72) Erfinder: Hofer, Guido, CH-5614 Sarmenstorf (CH)
(74) Vertreter: Fenner, Seraina

(56) Entgegenhaltungen:
- EP-A1- 1 068 919
- EP-A2- 0 897 776
- DE-A1- 19 805 165
- GB-A- 2 462 132

## Beschreibung

Die Erfindung betrifft eine auf einem verstellbaren. Maschinentisch einer zur Bearbeitung vorgesehenen Maschine eingespannter Werkstücke aufgebaute Einspanneinrichtung, mit einem auf dem Maschinentisch befestigten Einrichtungssockel, auf dem eine mit dem das Werkstück tragende, etwa senkrecht zustell- und abhebbare Palette ein Einspannfutter bildende Aufspannplatte befestigt ist, denen eine in Bewegungsrichtung der Palette mechanisch, pneumatisch und/oder hydraulisch betätigbare Ver- resp. Entriegelungsvorrichtung des Einspannfutters vorzugsweise zentrisch zugeordnet ist, vorzugsweise bei einer Werkzeugmaschine.

Bei der spanabhebenden Bearbeitung in der Fertigung von in Serien hergestellter Bauteile aus Metall, vornehmlich Stahl aus Eisen-Kohlenstoff-Legierungen oder Nichteisenmetallen ist eine hohe Präzision gefordert, an der eine Einspannvorrichtung oder ein als mechanisch/pneumatisch betätigbares Einspannaggregat bezeichnet entscheidend beteiligt ist.

Hierzu besteht eine mehrteilige Einspanneinrichtung, die aus einem auf einem Maschinentisch einer Werkzeugmaschine, beispielweise einem Fräs- oder Bohrwerk festgeschraubten Einrichtungssockel, auf dem eine mit dem das Werkstück tragende, zustell- und abhebbare Palette ein gemeinsames Einspannfutter bildende Aufnahmeplatte befestigt.

Das an einer stehenden Achse kreisförmig aufgebaute Einspannfutter ist mit einer mechanisch/pneumatisch betätigbaren Ver- resp. Entriegelungsvorrichtung ausgestattet, die dem Einspannen des auf einer das unbearbeitete Werkstück tragenden, auf die Aufnahmevorrichtung aufsetzbaren Palette und zum Abheben der Palette von dem auf der Palette bearbeiteten Werkstück dient.

Die vorveröffentlichte EP 1 952 922 A1 offenbart eine Spanneinrichtung mit einem Spannfutter und einem lösbar daran fixierbaren Werkstückträger (Palette). Das Spannfutter ist mit einem Spannmechanismus zum Fixieren des Werkstückträgers versehen, wobei der Spannmechanismus eine Vielzahl von Spannelementen umfasst, die als Schieberelemente ausgebildet sind.

Die EP 1 707 307 A1 vermittelt ein Schnellspannsystem mit einer Spannaufnahme, mit einem einseitig mit Federn beaufschlagten Kolben, der anderseitig mit Druck beaufschlagbar ist und mit einem am Kolben angeordneten und der Kolbenbewegung folgenden Stellglied, mit wenigstens einem senkrecht zur Kolbenachse verschiebbar geführt angeordneten Spannschieber, der über eine spannschieberseitige Schrägführung in beide Bewegungsrichtungen mit dem Stellglied bewegungsgekoppelt ist.

Die EP 1 068 919 A1 offenbart eine Einspanneinrichtung, auf der der Oberbegriff des Anspruchs 1 basiert.

Aufgabe der vorliegenden Erfindung ist es, dass bei/nach jeder Einspannbewegung resp. der Vereinigung der Aufspannplatte mit der das Werkstück tragenden Palette keine Abweichung der Bearbeitungsposition bezüglich der Achsen X und/oder Y und/oder Z entsteht resp. hinterlassen wird.

Erfindungsgemäss wurde die Aufgabe dadurch gelöst, dass die sich an einer senkrechten Bewegungsachse der Vorrichtung zugewandten Stirn- resp. Oberflächen der Aufspannplatte und der Palette auf deren Umfangsbereich resp. Randbereich verteilt jeweils wenigstens vier, paarweise diagonal diagonal gegenüberliegende, gleichgerichtet wirkende und im Verschlusszustand des Einspannfutters gegenseitig ineinandergreifende Verzahnungsabschnitte aufweisen.

Dadurch entsteht beim Verschlusszustand des Einspannfutters eine pyramidenförmig von vier Seiten über die Verzahnungsabschnitte auf die Aufspannplatte und Palette des Einspannfutters mehrfach wirkende (formschlüssige) Verkettung/Verankerung resp. Verspannung zwischen Aufspannplatte und Palette, d.h. es entsteht eine selbstzentierende Schliessbewegung des Einspannfutters.

Die erfindungsgemässe Einspanneinrichtung eignet sich auch für das additive Auftrags- bzw. Fertigungsverfahren beim schichtweisen Auftragen.

Die Einspanneinrichtung kann für eine senkrechte oder horizontale Bearbeitungsrichtung eingesetzt werden, und an der Palette kann eine Einspannvorrichtung zum Drehen, beispielsweise ein Dreibackenfutter oder Drehherz befestigt warden.

Erfindungsgemäß sind die Verzahnungsabschnitte der Aufspannplatte oder der Palette mit wenigstens zwei Zähnen ausgestattet, wobei bereits ein Zahn auf Seite der Aufspannplatte oder der Palette in eine Verzahnung mit zwei Zähnen auf der Gegenseite für eine starre Verbindung nach dem Erfindungsgedanken sorgt.

Vorzugsweise sind die jeweils zusammenwirkenden Verzahnungsabschnitte an der Aufspannplatte und der Palette in einem Winkel von ≤90° zueinander angeordnet.

Es erweist sich als zweckmässig, wenn die Zähne der Verzahnungsabschnitte oder - Verzahnungsfelder im verriegelten Zustand des Einspannfutters an den Flanken der Zähne gegenseitig (verzahnt) spielfrei anliegen und für eine formschlüssige Verbindung sorgen und ein verschleissfreies Einspannen aber auch Lösen der Palette an der Aufspannplatte gewährleisten.

Es ist vorteilhaft, wenn die Verzahnungsabschnitte von den sich zugewandten Stirnseiten/Oberflächen der Aufspannplatte und der Palette vor-, abstehend resp. hochstehend angeordnet sind, sodass sie sich mit einem spanabhebenden Werkzeug freistellen lassen.

Zweckmässig weisen die parallel verlaufenden Zähne der Verzahnungsabschnitte einen dreieck- oder trapezförmigen Querschnitt auf, der ein spielfreies und präzises Ineinandergreifen der Aufspannplatte und der Palette garantiert.

Zu diesem Zweck eignet sich eine gleichschenklige Dreiecks- oder Trapezform der Zähne.

Alternativ kann die Querschnittsform der Zähne ungleichschenklig ausgebildet sein, um eine genaue Einspannposition erreichen zu können.

Es erweist sich als eine zuverlässige Eingriffsverbindung, wenn die Dreiecksform der Zähne spitzwinklig ausgeführt ist, so dass eine absolut spielfrei wiederholbare konstante Einspannposition erreicht wird.

Eine stumpfwinklige Dreieckform der Zähne vermittelt keine genaue Einspannposition.

Damit eine Zahnspitze, ein Zahnkopf oder -scheitel auf der gegenüberliegenden Seite auf dem Grund zweier benachbarter Zähne nicht aufsitzen/aufstehen kann, kann vorgesehen werden, dass zwischen zwei an der Grundlinie zusammentreffenden Zähnen eine hinterstichartig verlaufende Ausnehmung vorgesehen wird, die raumbildend wirkt, sodass ausschliesslich die Zahnflanken gegenseitig eine genaue Einspannung bewirken.

Alternativ können an der Grund-/Fusslinie seitlich beabstandete Zähne der Verzahnungsabschnitte sowohl an der Aufspannplatte und Palette einen trapezförmigen Querschnitt mit gleich- oder ungleichschenkligen Seiten aufweisen, die durch die tragenden Flanken die Wirkung einer Verzahnung erbringen.

Im Sinne des Erfindungsgedankens sind die Abstände der Zähne eines Verzahnungsabschnittes den Eingreifenden entsprechend nachgebildet und mit gekürzten Zahnspitzen ausgebildet, so dass die gegenüberliegenden Zähne vorteilhaft mit den seitlichen Flanken aneinander anliegen können.

Nachfolgend wird die Erfindung unter Bezugnahme auf den zitierten resp. den zitierenden Stand der Technik und die Zeichnung, auf die bezüglich aller in der Beschreibung nicht näher erwähnten Einzelheiten verwiesen wird, anhand eines Ausführungsbeispiels erläutert. In der Zeichnung zeigen:
- Fig. 1: eine räumliche Darstellung eines auf einem Maschinentisch einer zur spanabhebenden Bearbeitung ausgebildeten Werkzeugmaschine befestigbaren Einspanneinrichtung,
- Fig. 2: einen senkrechten Schnitt durch die in Fig. 1 dargestellte Ein-Spanneinrichtung,
- Fig. 3: eine räumliche Darstellung des aus einer Aufspannplatte und einer das Werkstück tragenden Palette gebildeten Einspannfutters in geöffnetem Zustand, mit einem dreieck- und einer trapezförmigen Verzahnung,
- Fig. 4: eine Seitenansicht der Aufspannplatte der Einspanneinrichtung,
- Fig. 5: eine auszugsweise Seitenansicht des in den Fig. 1 bis 3 gezeigten Einspannfutters der Einrichtung,
- Fig. 6: veranschaulicht auszugsweise eine vergrösserte Seitenan-Sicht des geschlossenen Einspannfutters mit dreieckförmiger Verzahnung an den Verzahnungsabschnitten an der Aufspannplatte und der Palette und
- Fig. 7: stellt ein auszugsweise vergrössertes geschlossenes Einspannfutter mit trapezfömiger Verzahnung der Verzahnungsabschnitte an der Aufspannplatte und der Palette dar.

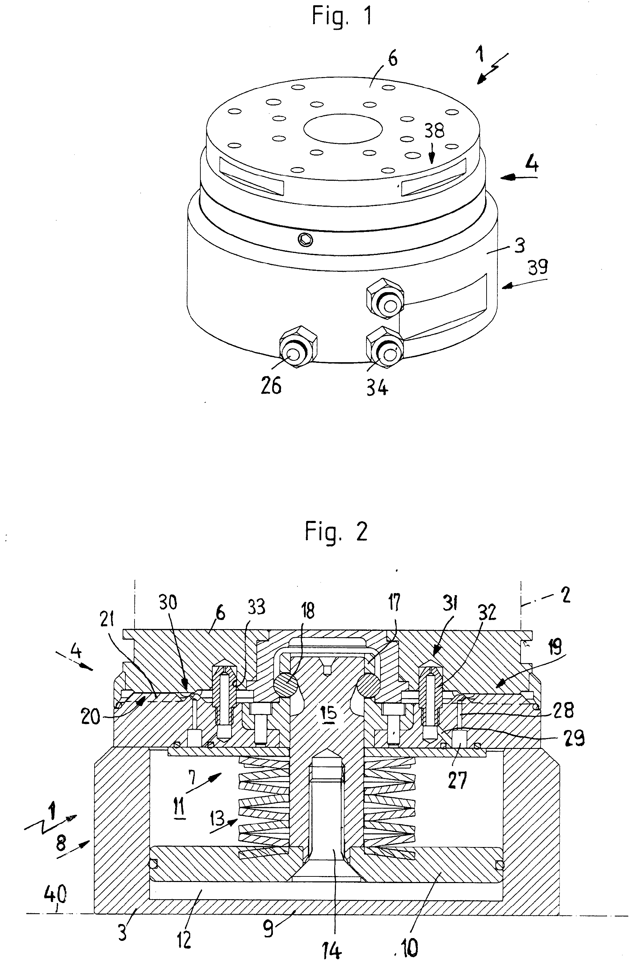

Die Fig. 1 bis 5 veranschaulichen eine auf einem Maschinentisch 40 oder auf einer Zwischenplatte (nicht ersichtlich) fest aufbaubare Einspanneinrichtung 1 zur spanabhebenden Bearbeitung durch eine Werkzeugmaschine (nicht dargestellt) vornehmlich an einem Werkstück aus Metall (in Fig. 2 strichpunktiert angedeutet).

Die Einspanneinrichtung 1 weist einen Einrichtungssockel 3 als Basis- oder Verbindungssupport zum Maschinentisch 40 oder der Zwischenplatte auf. Der Einrichtungssockel 3 ist insbesondere zur Verriegelung und Entriegelung einer ein Einspannfutter 4 aus einer Aufspannplatte 5 und einer das Werkstück 2 tragenden Palette 6 bildenden Ver- und Entriegelungsvorrichtung 7 ausgestaltet.

Fig. 2 vermittelt u.a. die Ver- und Entriegelungsvorrichtung 7, die einen zylindrischen Hohlraum 8 aufweist, der topfartig -mit einem Boden 9- ausgebildet ist. Eine mechanisch und pneumatisch betätgbare Kolbenplatte 10 trennt den Hohlraum 8 in einen mechanischen 11 und einen auf der Kolbenplatte 10 gegenüber liegenden pneumatischen Kompressionsraum 12. Die mechanische Kompression wird durch eine Druckfeder 8, hier eine Tellerfeder, und die pneumatische Kompression durch eine auf der Gegenseite auf die Kolbenplatte 10 einwirkende Druckkraft wechselweise zur Ver- und Entriegelung des Einspannfutters manuell oder automatisch gesteuert ausgeübt.

Vorliegend heisst das, dass der pneumatische Druck auf die Kolbenplatte 10 der Entriegelung des Einspannfutters 4 und die Druckfeder 13 der Verriegelung des Einspannfutters 4 dient.

Die bewegliche Kolbenplatte 10 ist durch eine Schraube 14 mit einem Verriegelungsbolzen 14 verbunden, der die Druckfeder 13 durchsetzt und am Umfang mehrere in Bewegungsrichtung des Verriegelungsbolzens 15 resp. der hubartigen Kolbenplattenbewegungen angeordnete Führungsnuten 16 aufweist, in denen in einem den Verriegelungsbolzen 15 umgebender Käfigring 17 angeordnete Verriegelungskugeln 18 geführt sind, wobei das obere Ende der Führungsnuten 16 radial erweitert ist, so dass bei Erreichen einer oberen Endstellung des Verriegelungsbolzens 15, die Verriegelungskugeln 18 aus der Verriegelungsposition in den Führungsnuten 16 in die erweiterten Führungsnutenenden sich versetzen und so die Verriegelung von Aufspannplatte 5 und Palette 6 aufheben.

Die Verriegelung des Einspannfutters 4 folgt in der umgekehrten Bewegungsrichtung von Verriegelungsbolzen 15 resp. Kolbenplatte 14. Damit wäre das Wesentliche zur Funktion und Ausführung einer Einspanneinrichtung beschrieben.

Erfindungswesentlich ist bei einer Einspanneinrichtung der vorliegenden Art die Ausbildung eines Einspannfutters 4 und das Zusammenwirken der mit dem Einrichtungssockel 3 fest verbundenen Aufspannpiatte 5 und der darauf aufsetzbaren, ein Werkstück 2 zur spanabhebenden Bearbeitung tragenden Palette 6, die nach der Bearbeitung des Werkstücks 2 wieder von der Aufspannplatte 5 abgehoben wird.

Zur Gewährleistung einer hochpräzisen Bearbeitung eines Werkstücks 2 durch das Einspannfutter 4, sind die einander zugewandten Stirn- resp. Oberflächen 19 und 20 resp. die Oberseite von Aufspannplatte 5 und Unterseite der Palette 6 an einer senkrechten Bewegungsachse der Einspannrichtung 1 angeordnet und weisen im Umfangs- oder Aussenbereich resp. Randbereich verteilt, jeweils mehrere, vorzugsweise vier, paarweise diagonal an der Bewegungsachse gegenüberliegende und gleichgerichtet zusammenwirkende Verzahnungsabschnitte 21 und 22 auf, die im Verschiusszustand des Einspanmnfutters 4 gegenseitig formschlüssig ineinandergreifen, so dass die Zähne 23, 24 an den Flanken 25, 26 aneinander anliegen.

Die Verzahnungsabschnitte sind bei kreisrunder oder mehreckiger Aufspannplatte 5 und Palette 6 um die Bewegungsachse vorzugsweise gleichmässig und konzentrisch zu Letzterer, von den Oberflächen 19 und 20 hochstehend angeordnet/befestigt.

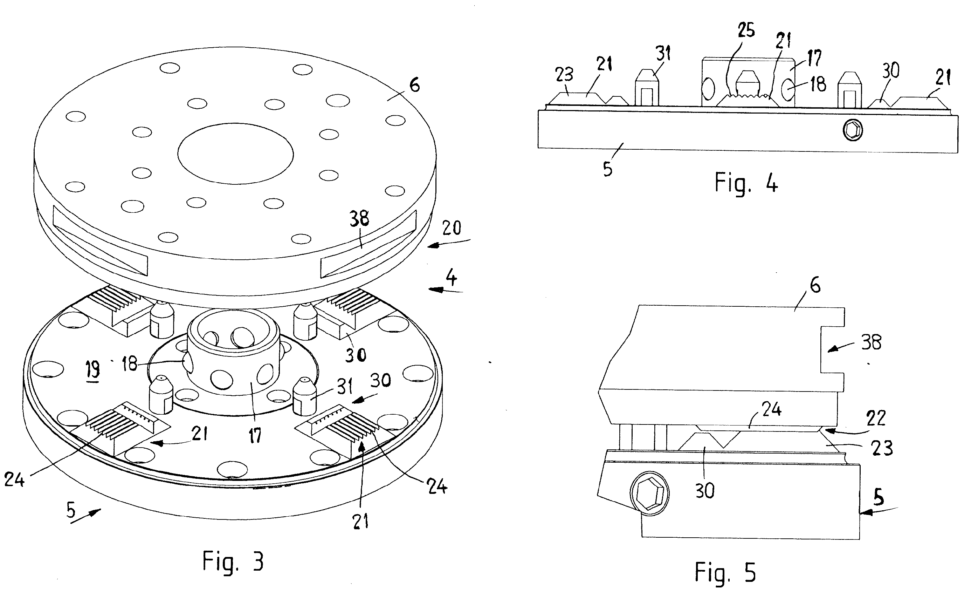

Die pratzenartigen Verzahnungsabschnitte 22, die an der Palette nur in Fig. 5 feststellbar sind, sind sowohl an der Aufspannplatte 6 wie an der Palette 6 durch nebeneinander aneinandergereihte Zähne 23, 24 ausgebildet, welche bei einem Verschluss oder geschlossener Betriebsstellung des Einspannfutters 4 gegenseitig ineinander eintauchen, ja mit ihren Flanken 25 aneinander festgesetzt anliegen. Jeweils wenigstens die Aufspannplatte 5 und die Palette 6 weisen Verzahnungsabschnitte 21, 22 mit wenigstens einem Zahn 23, 24 (eine Zahnleiste) auf, wogegen die Palette 6 oder die Aufspannplatte5 mehrere resp. wenigstens zwei für einen Eingriff vorgesehene Zähne 24, 23 aufweisen.

Bei der Ausführung nach Fig. 3 bestehen die Verzahnungsabschnitte 21 aus acht Zähnen, ebenso die nicht ersichtlichen Verzahnungsabschnitte 22 an der gegenüberliegenden Palette 6.

Fig. 3 zeigt weiterhin die an der senkrechten Bewegungsachse konzentrisch gegenüberliegenden, gleichgerichteten Verzahnungsabschnittspaare 21 der im Randbereich der Aufspannplatte 5 mit parallel nebeneinander befestigten Zähnen.

Die im Randbereich der Aufspannplatte 5 und der Palette 6 diagonal gegenüberliegenden Verzahnungsabschnitte 21, 22 sind in einem Winkel von etwa 90° oder weniger verteilt am Umfang angeordnet, wo sie eine optimale Einspannwirkung entfalten können.

Ihre gegenseitige Anordnungsweise entspricht jeweils einem rechten Winkel. Selbstverständlich könnten weitere zusätzliche Verzahnungsabschnitte zugeordnet werden, die jedoch keine verbesserte Lagegenauigkeit der Einspannfutters 4 bewirken.

Die vorstehenden Zähne 23, 24 der Verzahnungsabschnitte 21, 22 weisen einen stehenden, dreieckförmigen Querschnitt auf, der das Ineinandergreifen schonend gestattet und durch ihre getrennte Anordnungsweise eine optimale Verriegelungsgenauigkeit gewährt.

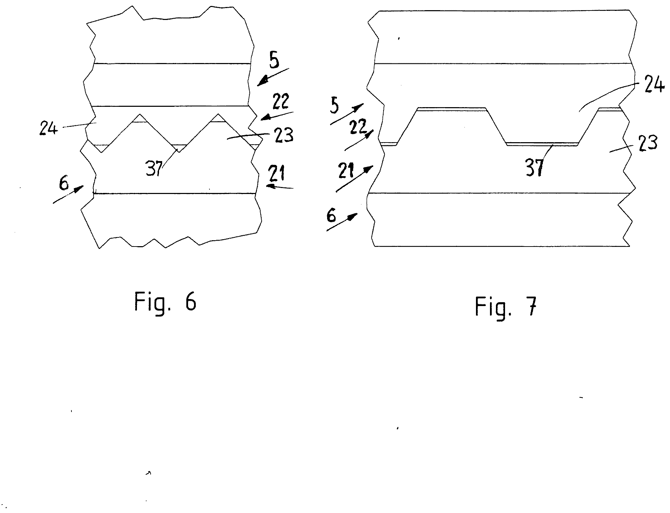

Wie in den Fig. 3 und 6 gezeigt, weisen die Zähne der Verzahnungsabschnitte 21 und 22 gleichschenklige Zahnformen auf.

Selbstverständlich können auch gegenseitig ungleichschenklige Dreieckzahnquerschnitte bei der Bildung der Verzahnungsabschnitte verwendet werden.

Vorteilhaft sind spitzwinklige Zahnformen, die eine besondere Eingriffsgenauigkeit bewirken.

Die Zähne 23 und 24, die gleiche Längen aufweisen, können an der Grundlinie gegenüberliegender Zähne 23, 24 anstehend auftreffen, sodass eine hinterstichartig verlaufende Ausnehmung an der Grundlinie vorzusehen ist.

Alternativ und wie dargestellt, sind die Zähne 23, 24 der Verzahnungsabschnitte 21, 22 an den freien Enden egalisiert, angeschliffen resp. zurückgeschliffen ausgebildet, sodass sie an der Verbindungsstelle resp. dem Zahnfuss mit ihren freien Enden nicht auftreffen.

Bei einer anderen Verzahnung der Verzahnungsabschnitte 21, 22 sind die Zähne 23, 24 an der Grundlinie seitlich voneinander beabstandet und weisen einen von den sich zugewandten Stirnseiten der Aufspannplatte 5 und der Palette 6 vor- resp. abstehenden trapezförmigen Querschnitt mit gleich-oder ungleichschenkligen Seiten auf.

Die trapezförmige Zahnquerschnittsform ist bei einem geschlossenen Einspannfutter 4 aus Aufspannplatte und Palette in Fig. 7 dargestellt. Sie zeigt ineinandergreifende Verzahnungsabschnitte zwischen der Aufspannplatte 5 und Palette 6 bei geschlossenem Einspannfutter 4, wobei die Trapezseiten gegenseitig aneinander anliegen und die Zahnköpfe einerseits mit den Zahnfüssen andererseits jeweils einen Spalt 37 bilden.

Damit ein Auftreffen der trapezförmigen Zähne am Zahngrund zwischen den Zähnen nicht entsteht, sind die kürzeren Grundseiten der trapezförmigen Zähne zurückgeschliffen und bilden einen Abstand mit den gegenüberliegenden Grundlinien/ Zahnfüssen der Zähne, sowohl von Aufspannplatte wie auch der Palette.

Fig. 1 veranschaulicht am Umfang des Einrichtungssockels 3 ein Anschlussende 26 einer internen Leitung für Druckluft zum Ausblasen von Spänen und Schneidflüssigkeit und dgl. an den Verzahnungsabschnitten 21, 22 bei geöffnetem Einspannfutter 4 resp. getrennten Aufspannplatte 5 und Palette 6. Die nicht ersichtliche Druckluftleitung führt gemäss Fig. 2 in dem Einrichtungssockel 3 in einen konzentrisch angeordneten Ringkanal 27 der Aufspannplatte 5 und wird auf jeweils zwei Leitungsabschnitte 28, 29 verteilt. Leitungsabschnitt 28 führt die Druckluft über eine Düsenbatterie 30 in Reihe angeordneter Düsen in den Wirkbereich der Verzahnungsabschnitte 21, 22 der Aufspannplatte 5 und der Palette 6 (siehe Fig. 2 und 3).

Der Leitungsabschnitt 29 leitet die Druckluft über eine Führungsanordnung 31 in eine Trennebene resp. einen Trennbereich zwischen Aufspannplatte 5 und Palette 6 bei geöffnetem Einspannfutter.

Die Führungsanordnung 31 besteht jeweils aus einem Führungsbolzen 15 in der Aufspannplatte 5, der beim Zustellen der Palette 6 in eine ihm zugeordnete Bohrung 33 in die Palette 6 eingeführt wird.

Der Leitungsabschnitt 29 durchsetzt in Längsrichtung den Führungsbolzen 32 und mündet in den Trennbereich zwischen Aufspannplatte 5 und Palette 6 im offenen Zustand des Einspannfutters 4. Die Steuerung der Druckluft zur Reinigung resp. zum Ausblasen des Einspannfutters 4 erfolgt separat.

Die Fig. 1 bis 5 zeigen am Umfang von Aufspannplatte 4 und Palette 5 angeordnete Aufspannkonsolen 38, 39 die für pratzenartig eingreifende Spannelemente (nicht dargestellt) vorgesehen sind, welche Spannelemente in T-Nuten eines Maschinentisches oder einer Zwischenplatte geführt und in Nutensteinen verankert sind.

Der weitere Druckluftanschluss 34 an dem Einrichtungssockel 3 führt über eine in den Fig. 1 und 2 nicht ersichtliche Leitung in den Kompressionsraum 12 des Hohlraumes 8 und die Druckluft wird über ein betätigbares Ventil gesteuert.

## Patentansprüche

1. Einspanneinrichtung (1) zum Aufbau auf einem verstellbaren Maschinentisch (40) einer zur spanabhebenden Bearbeitung von eingespannten Werkstücken (2) vorgesehenen Werkzeugmaschine, mit einem auf dem Maschinentisch (40) befestigbaren Einrichtungssockel (3), auf dem eine mit der das Werkstück (2) tragende, etwa senkrecht zustell- und abhebbaren Palette (6) ein Einspannfutter (4) bildende Aufspannplatte (5) befestigt ist, denen eine in Bewegungsrichtung der Palette (6) mechanisch, pneumatisch und/oder hydraulisch betätigbare Ver- resp. Entriegelungsvorrichtung (7) des Einspannfutters (4) vorzugsweise zentrisch zugeordnet ist, wobei die sich an einer senkrechten Bewegungsachse zugewandten Stirn- resp. Oberflächen (19, 20) der Aufspannplatte (5) und der Palette (6) auf deren Umfangsbereich resp. Randbereich verteilt jeweils wenigstens vier paarweise diagonal gegenüberliegende, gleichgerichtet zusammenwirkende und im Verschlusszustand des Einspannfutters (4) gegenseitig formschlüssig ineinandergreifende Verzahnungsabschnitte (21, 22) aufweisen, **dadurch gekennzeichnet, dass** die Verzahnungsabschnitte (21, 22) der Aufspannplatte (5) oder der Palette (6) mit wenigstens zwei Zähnen (23, 24) ausgestattet sind, wobei bereits ein Zahn (23, 24) auf Seite der Aufspannplatte (5) oder der Palette (6) in eine Verzahnung mit zwei Zähnen (23, 24) auf der Gegenseite für eine starre Verbindung sorgt.

2. Einrichtung nach Anspruch 1, **dadurch gekennzeichnet, dass** die paarweise diagonal gegenüberliegenden Verzahnungsabschnitte (22, 23) an der Aufspannplatte (5) und der Palette (6) jeweils einen Winkel von ≤ 90° bilden.

3. Einrichtung nach einem der Ansprüche 1 bis 2, **dadurch gekennzeichnet, dass** die Zähne (23, 24) der Verzahnungsabschnitte (21, 22) von Aufspannplatte (5) und Palette (6) im Verriegelungszustand des Einspannfutters (4) an den Flanken (25) der Zähne (23, 24) gegenseitig anliegen.

4. Einrichtung nach einem der Ansprüche 1 bis 3, **dadurch gekennzeichnet, dass** die Verzahnungsabschnitte (21, 22) an den sich zugewandten Oberflächen (19, 20) der Aufspannplatte (5) und der Palette (6) vor-/abstehend angeordnet/befestigt sind.

5. Einrichtung nach einem der Ansprüche 1 bis 4, **dadurch gekennzeichnet, dass** die parallel verlaufenden Zähne (23, 24) der Verzahnungsabschnitte (21, 22) einen dreieck- oder trapezförmigen Querschnitt aufweisen.

6. Einrichtung nach Anspruch 5, **dadurch gekennzeichnet, dass** der Querschnitt der Zähne (23, 24) als gleichschenkliges Dreieck ausgebildet ist.

7. Einrichtung nach einem der Ansprüche 1 bis 5, **dadurch gekennzeichnet, dass** der Querschnitt der Zähne (23, 24) als ungleichschenkliges Dreieck ausgebildet ist.

8. Einrichtung nach einem der Ansprüche 5 bis 7, **dadurch gekennzeichnet, dass** die Dreieckform der Zähne (23, 24) vorzugsweise spitzwinklig ausgebildet ist.

9. Einrichtung nach einem der Ansprüche 1 bis 8, **dadurch gekennzeichnet, dass** zwischen zwei an der Grundlinie zusammentreffenden Zähnen (23, 24) der Aufspannplatte (5) oder der Palette (6) eine hinterstichartig verlaufende Ausnehmung vorgesehen ist.

10. Einrichtung nach einem der Ansprüche 1 bis 6, **dadurch gekennzeichnet, dass** die freien Ende der Zähne (23, 24) der Verzahnungsabschnitte (21, 22) egalisiert resp. zurückversetzt ausgebildet sind.

11. Einrichtung nach einem der Ansprüche 1 bis 4, **dadurch gekennzeichnet, dass** die Zahnspitzen der Zähne (23, 24) der Verzahnungsabschnitte (21, 22) an der Grund- bzw. Fusslinie voneinander beabstandet sind und einen von den sich zugewandten Stirnseiten (19, 20) der Aufspannplatte (5) und der Palette (6) vor-/ abstehenden trapezförmigen Querschnitt mit gleich- oder ungleichschenkligen Seiten aufweisen.

12. Einrichtung nach Anspruch 11, **dadurch gekennzeichnet, dass** die Abstände der ineinandergreifenden Zähne (23, 24) jeweils an deren Querschnittsform angepasst sind.

13. Einrichtung nach einem der Ansprüche 11 oder 12, **dadurch gekennzeichnet, dass** die kürzere Grundseite der trapezförmigen Zähne (23, 24) mit den zwischen zwei Zähnen (23, 24) gebildeten Grundlinie der Aufspannplatte (5) resp. der Palette (6) mit den Zahnköpfen einen Abstand bilden.

14. Einrichtung nach einem der Ansprüche 1 bis 13, **dadurch gekennzeichnet, dass** eine aus mehreren Düsen gebildete Düsenbatterie (30) zur Verteilung von zugeführter Druckluft auf die Verzahnungsabschnitte (21, 22) des geöffneten Einspannfutters (4) an dem inneren Ende der Verzahnungsabschnitte (21, 22) der Aufspannplatte (5) vorgesehen ist.

## Claims

1. Clamping device (1) for fitting on an adjustable machine table (40) of a machine tool that is intended for cutting machining of clamped workpieces (2), having a device base (3) which is fastenable to the machine table (40) and on which a clamping plate (5) is fastened, a chuck (4) being formed by said clamping plate together with the pallet (6) which holds the workpiece (2) and is able to be advanced and lifted off in an approximately vertical direction, there being assigned preferably centrally thereto a locking/unlocking apparatus (7) of the chuck (4) that is mechanically, pneumatically and/or hydraulically actuatable in a movement direction of the pallet (6), wherein those end faces or surfaces (19, 20) of the clamping plate (5) and the pallet (6) which face one another at a vertical movement axis have, distributed on their peripheral region or edge region, in each case at least four toothing portions (21, 22) which are situated diagonally opposite one another in pairs, which interact in the same direction and which, in the closure state of the chuck (4), interengage with a mutual form fit, **characterized in that** the toothing portions (21, 22) of the clamping plate (5) or of the pallet (6) are provided with at least two teeth (23, 24), wherein just one tooth (23, 24) on the side of the clamping plate (5) or of the pallet (6) in a toothing with two teeth (23, 24) on the opposite side provides for a rigid connection.

2. Device according to Claim 1, **characterized in that** the toothing portions (22, 23) situated diagonally opposite one another in pairs on the clamping plate (5) and on the pallet (6) in each case form an angle of ≤ 90°.

3. Device according to either of Claims 1 and 2, **characterized in that**, in the locking state of the chuck (4), the teeth (23, 24) of the toothing portions (21, 22) of mounting plate (5) and pallet (6) abut against one another at the flanks (25) of the teeth (23, 24).

4. Device according to one of Claims 1 to 3, **characterized in that** the toothing portions (21, 22) are arranged on/fastened to the mutually facing surfaces (19, 20) of the clamping plate (5) and the pallet (6) in a projecting/protruding manner.

5. Device according to one of Claims 1 to 4, **characterized in that** the teeth (23, 24), extending in a parallel manner, of the toothing portions (21, 22) have a triangular or trapeziform cross-section.

6. Device according to Claim 5, **characterized in that** the cross section of the teeth (23, 24) is configured as an isosceles triangle.

7. Device according to one of Claims 1 to 5, **characterized in that** the cross section of the teeth (23, 24) is configured as a non-isosceles triangle.

8. Device according to one of Claims 5 to 7, **characterized in that** the triangular shape of the teeth (23, 24) is preferably configured to have an acute angle.

9. Device according to one of Claims 1 to 8, **characterized in that**, between two teeth (23, 24) of the clamping plate (5) or the pallet (6) that meet at the base line, provision is made of a recess extending in the manner of an undercut.

10. Device according to one of Claims 1 to 6, **characterized in that** the free ends of the teeth (23, 24) of the toothing portions (21, 22) are formed so as to be levelled or set back.

11. Device according to one of Claims 1 to 4, **characterized in that** the tooth tips of the teeth (23, 24) of the toothing portions (21, 22) are spaced apart from one another at the base line or foot line and have a trapeziform cross section with legs of equal or unequal length that projects/protrudes from the mutually facing end faces (19, 20) of the clamping plate (5) and the pallet (6).

12. Device according to Claim 11, **characterized in that** the spacings of the interengaging teeth (23, 24) are in each case adapted to the cross-sectional shape thereof.

13. Device according to either of Claims 11 and 12, **characterized in that** the shorter base side of the trapeziform teeth (23, 24) forms, with the tooth tips, a spacing with the base line of the clamping plate (5) or of the pallet (6) that is formed between two teeth (23, 24).

14. Device according to one of Claims 1 to 13, **characterized in that**, at the inner end of the toothing portions (21, 22) of the clamping plate (5), provision is made of a nozzle battery (30) which is formed from multiple nozzles and serves for distributing fed compressed air among the toothing portions (21, 22) of the open chuck (4).

## Revendications

1. Dispositif de serrage (1) destiné à être monté sur une table de machine (40) réglable d'une machine-outil prévue pour l'usinage par enlèvement de copeaux de pièces (2) serrées, avec un socle de dispositif (3) pouvant être fixé sur la table de machine (40), sur lequel est fixé une plaque de montage (5) formant un mandrin de serrage (4) avec la palette (6) portant la pièce (2), pouvant être approchée et soulevée approximativement verticalement, auquel est associé, de préférence de manière centrée, un dispositif de verrouillage ou de déverrouillage du mandrin de serrage (4) actionnable mécaniquement, pneumatiquement et/ou hydrauliquement dans la direction de déplacement de la palette (6), les surfaces frontales ou supérieures (19, 20) de la plaque de montage (5) et de la palette (6), tournées vers un axe de déplacement vertical, présentant de manière répartie sur leur zone périphérique ou leur zone de bord, respectivement au moins quatre sections de denture (21, 22) opposées en diagonale par paires, coopérant dans la même direction et s'engrenant mutuellement par complémentarité de forme dans l'état de fermeture du mandrin de serrage (4), **caractérisé en ce que**
les sections de denture (21, 22) de la plaque de montage (5) ou de la palette (6) sont équipées d'au moins deux dents (23, 24), une dent (23, 24) du côté de la plaque de montage (5) ou de la palette (6) assurant déjà une liaison rigide dans une denture avec deux dents (23, 24) sur le côté opposé.

2. Dispositif selon la revendication 1, **caractérisé en ce que** les sections de denture (22, 23) opposées en diagonale par paires sur la plaque de montage (5) et la palette (6) forment chacune un angle de ≤ 90°.

3. Dispositif selon l'une quelconque des revendications 1 à 2, **caractérisé en ce que** les dents (23, 24) des sections de denture (21, 22) de la plaque de montage (5) et de la palette (6) s'appliquent mutuellement sur les flancs (25) des dents (23, 24) dans l'état de verrouillage du mandrin de serrage (4).

4. Dispositif selon l'une quelconque des revendications 1 à 3, **caractérisé en ce que** les sections de denture (21, 22) sont agencées/fixées en saillie/en retrait sur les surfaces supérieures (19, 20) de la plaque de montage (5) et de la palette (6) qui se font face.

5. Dispositif selon l'une quelconque des revendications 1 à 4, **caractérisé en ce que** les dents parallèles (23, 24) des sections de denture (21, 22) présentent une section transversale triangulaire ou trapézoïdale.

6. Dispositif selon la revendication 5, **caractérisé en ce que** la section transversale des dents (23, 24) est réalisée sous forme de triangle isocèle.

7. Dispositif selon l'une quelconque des revendications 1 à 5, **caractérisé en ce que** la section transversale des dents (23, 24) est réalisée sous forme de triangle scalène.

8. Dispositif selon l'une quelconque des revendications 5 à 7, **caractérisé en ce que** la forme triangulaire des dents (23, 24) est de préférence réalisée à angle aigu.

9. Dispositif selon l'une quelconque des revendications 1 à 8, **caractérisé en ce qu'**entre deux dents (23, 24) de la plaque de montage (5) ou de la palette (6) se rencontrant sur la ligne de base, il est prévu un évidement s'étendant à la manière d'une contre-dépouille.

10. Dispositif selon l'une quelconque des revendications 1 à 6, **caractérisé en ce que** les extrémités libres des dents (23, 24) des sections de denture (21, 22) sont réalisées sous forme égalisée ou décalées vers l'arrière.

11. Dispositif selon l'une quelconque des revendications 1 à 4, **caractérisé en ce que** les pointes de dent des dents (23, 24) des sections de denture (21, 22) sont espacées les unes des autres sur la ligne de base ou de pied et présentent une section transversale trapézoïdale en saillie/en retrait des côtés frontaux (19, 20) de la plaque de montage (5) et de la palette (6) qui se font face, avec des côtés isocèles ou scalènes.

12. Dispositif selon la revendication 11, **caractérisé en ce que** les distances des dents (23, 24) qui s'engrènent sont respectivement adaptées à leur forme de section transversale.

13. Dispositif selon l'une quelconque des revendications 11 ou 12, **caractérisé en ce que** le côté de base plus court des dents trapézoïdales (23, 24) forme une distance avec la ligne de base, formée entre deux dents (23, 24), de la plaque de montage (5) ou de la palette (6) avec les têtes de dent.

14. Dispositif selon l'une quelconque des revendications 1 à 13, **caractérisé en ce qu'**une batterie de buses (30) formée de plusieurs buses est prévue pour la distribution d'air comprimé amené sur les sections de denture (21, 22) du mandrin de serrage ouvert (4) à l'extrémité intérieure des sections de denture (21, 22) de la plaque de montage (5).
